# EUROPEAN PATENT SPECIFICATION

(11) **EP 0 649 873 B1**
(45) Date of publication and mention of the grant of the patent: **12.02.1997**
(21) Application number: 94116490.7
(22) Date of filing: 19.10.1994
(51) Int. Cl.: C08L 53/02

(54) **Oil-resistant resin composition**
Ölbeständige Harzzusammensetzung
Composition de résine résistante à l'huile

(30) Priority: 21.10.1993 JP 285777/93
(43) Date of publication of application: 26.04.1995
(73) Proprietor: KURARAY Co. LTD., Okayama 710 (JP)
(72) Inventor: Nakata, Hiromichi, c/o Kuraray Co. Ltd., Kashima-gun, Ibaraki 314-02 (JP); Hashimoto, Katsuya, c/o Kuraray Co. Ltd., Kashima-gun, Ibaraki 314-02 (JP); Masuda, Mikio, c/o Kuraray Co. Ltd., Kashima-gun, Ibaraki 314-02 (JP); Ishii, Masao, c/o Kuraray Co. Ltd., Kashima-gun, Ibaraki 314-02 (JP)
(74) Representative: Deufel, Paul, Dr.

(56) References cited:
- US-A- 3 670 054

## Description

### 1. Field of the Invention

This invention relates to a resin composition comprised of a hydrogenated block copolymer and a thermoplastic resin, and provides a resin composition that can obtain a molded product characteristic of a superior resistance to organic solvents, having a flexibility and also having good properties in respect of low-temperature properties and mechanical strength.

### 2. Description of the Related Art

Hydrogenated products of block copolymers comprised of a monovinyl arene and a conjugated diene compound are what is called thermoplastic elastomers capable of turning plastic upon heating. Molded products made of these have good weather resistance and thermal resistance, also have a rubber elasticity rich in flexibility and have the same strength and elasticity as vulcanized rubbers.

On account of such properties, hydrogenated block copolymers have replaced conventional vulcanized rubbers, and are widely used as molding materials for sundries for daily use, automobile parts, light electrical appliance parts and various industrial goods.

The hydrogenated products of block copolymers (or hydrogenated block copolymers) comprised of a monovinyl arene and a conjugated diene compound are obtained by hydrogenating block copolymers comprised of a monovinyl arene and a conjugated diene compound (Japanese Patent Publications No. 42-4704, No. 42-8933, No. 43-6636 and No. 48-3555, and Japanese Patent Application Laid-open No. 46-7291).

Meanwhile, it is attempted to mix the hydrogenated products of block copolymers comprised of a monovinyl arene and a conjugated diene compound with various thermoplastic resins so that molded products made of the resulting compositions can be improved in impact resistance, flexibility, low-temperature properties and so forth.

It is also attempted to mix the hydrogenated products of block copolymers comprised of a monovinyl arene and a conjugated diene compound with various thermoplastic resin and mineral oil type softening agents so that the resulting compositions can be used as substitutes for vulcanized rubber.

However, the molded products made of such hydrogenated products of block copolymers comprised of a monovinyl arene and a conjugated diene compound have the disadvantages that they may melt or swell when coming into contact with cuts of petroleum distillates such as mineral oils, organic solvents or asphalt or with vapors thereof, and have a limit in their uses for themselves.

In order to improve resistance to organic solvents, it is proposed to use a block copolymer comprised of a monovinyl arene and a conjugated diene compound, where, to both terminals of the molecular chain of the block copolymer, butadiene polymer blocks having a 1,4-content of 75% or more have been introduced, and the block copolymer has been further hydrogenated to a rate of hydrogenation of 80% or more (U.S. Patent No. 3,670,054). It is also stated that, in order for this block copolymer to show a rubber elasticity, the block copolymer is formed making use of an isoprene polymer or butadiene polymer in the middle block of the molecule.

The block copolymer formed making use of an isoprene polymer in the middle block of the molecule has a good resistance to organic solvents, but is disadvantageous in that it has an insufficient mechanical strength.

As for the block copolymer formed making use of a butadiene polymer in the middle block of the molecule, a microstructure pertaining to the butadiene polymer greatly affects flexibility and low-temperature properties. For example, if the butadiene polymer block at the middle of the molecule has a small 1,2-content, no rubber elasticity can be attained. If on the other hand the butadiene polymer block has a large 1,2-content, the low-temperature properties become unsatisfactory. For this reason, in order to satisfy both rubber elasticity and low-temperature properties at the same time, the butadiene polymer block at the middle of the molecule must be made to have a 1,2-content of 35 to 55%.

In order to control the butadiene polymer block at the middle of the molecule to have a 1,2-content of 35 to 55%, it is necessary to add a small amount of a Lewis acid such as tetramethylethylenediamine or diethylene glycol dimethyl ether in the polymer system when a monovinyl arene is polymerized and subsequently butadiene is polymerized.

Employment of this method, however, results in an increase in the 1,2-content of butadiene polymer blocks introduced at the terminals, so that it becomes impossible to obtain the desired copolymer in which butadiene polymer blocks having a 1,4-content of 75% or more have been introduced to the terminals, bringing about an unsatisfactory resistance to organic solvents.

Accordingly, in order to obtain block copolymers formed making use of a butadiene polymer in the middle block of the molecule, it is necessary to use a method in which a butadiene polymer block having a 1,4-content of 75% or more, a monovinyl arene polymer block and a butadiene polymer block having a large 1,2-content are successively polymerized, followed by coupling using a coupling agent. There, however, is a limit to the efficiency of coupling reaction at the time of the coupling, so that no hydrogenated block copolymers having a satisfactory mechanical strength can be obtained.

In other words, at the present stage of affairs, no hydrogenated block copolymers have been available that simultaneously satisfy the resistance to organic solvents, the mechanical strength and the flexibility.

An object of the present invention is to provide a resin composition comprised of a specific hydrogenated block copolymer and a thermoplastic resin so as to provide a resin composition that can obtain a molded product that can well satisfy resistance to organic solvents, mechanical strength, flexibility and so forth.

To achieve the above object, the present invention provides an oil-resistant resin composition comprising from 1% by weight to 99% by weight of i) a hydrogenated block copolymer having at least two polymer blocks A, at least one polymer block B and at least one polymer block C in the molecule and from 99% by weight to 1% by weight of ii) a thermoplastic resin;
said polymer block A being a polymer block comprising a monovinyl arene;
said polymer block B being a hydrogenated polymer block obtained by hydrogenating to a rate of hydrogenation of not less than 85% a butadiene polymer block having a 1,4-content of not less than 80% before hydrogenation; and said hydrogenated polymer block having a crystalline melting point of not lower than 85°C after hydrogenation; and
said polymer block C being a hydrogenated polymer block obtained by hydrogenating to a rate of hydrogenation of not less than 85% an isoprene-butadiene random copolymer block having a 1,4-content of not less than 80% before hydrogenation; and said hydrogenated polymer block having a crystalline heat of fusion of not higher than 35 mJ/mg after hydrogenation.

### DETAILED DESCRIPTION OF THE INVENTION

The present invention will be described below in detail.

In the hydrogenated block copolymer of the component-i), a polymer block comprising a monovinyl arene is used as the polymer block A. Such a monovinyl arene can be exemplified by styrene, α-methylstyrene, o-methylstyrene, m-methylstyrene, p-methylstyrene, 1,3-dimethylstyrene, vinylnaphthalene and vinyl anthrathene, in particular, can be preferably exemplified by styrene and α-methylstyrene. Two or more kinds of these may be used in combination. As the polymer block A to be used, which may cause a lowering of mechanical properties if its number average molecular weight is 1,500 or less, it may preferably have a number average molecular weight of not less than 2,000, and more preferably from 3,500 to 50,000.

As the polymer block A, at least two polymer blocks must be present in the component-i) hydrogenated block copolymer. This is because the mechanical properties may become low if only one polymer block A is present therein.

The polymer block B in the component-i) hydrogenated block copolymer is comprised of a hydrogenated polymer block comprising a butadiene polymer having a 1,4-content of not less than 80%, and preferably not less than 85%, before hydrogenation.

A butadiene polymer having a 1,4-content of less than 80% before hydrogenation may make the polymer block B have a poor crystallinity after hydrogenation, so that a molded product made of a resin composition comprised of a hydrogenated block copolymer containing such a butadiene polymer, and a thermoplastic resin, may have an unsatisfactory solvent resistance.

In the polymer block B, not less than 85%, and preferably not less than 90%, of unsaturated bonds in its molecular chain must have been hydrogenated. This is because a polymer block hydrogenated to a rate less than 85% may make it impossible for the hydrogenated block copolymer to be improved in solvent resistance and to have a weather resistance and a thermal resistance, so that a molded product made of a resin composition comprised of such a hydrogenated block copolymer and a thermoplastic resin may have unsatisfactory solvent resistance, weather resistance and thermal resistance.

Meanwhile, the polymer block B becomes crystalline upon the hydrogenation at the part of unsaturated bonds in its molecular chain. In this case, if the polymer block B has a crystalline melting point of lower than 85°C as a result of this crystallization, the hydrogenated block copolymer can not bring about a satisfactory improvement in the solvent resistance, so that a resin composition comprised of such a hydrogenated block copolymer and a thermoplastic resin may have unsatisfactory solvent resistance. Hence, the polymer block B to be used have a crystalline melting point of not lower than 85°C, and preferably not lower than 90°C, after hydrogenation. In the present specification, the crystalline melting point refers to the temperature at which crystalline melting of the polymer block B occurs.

The crystalline melting point of the polymer block B can be determined by differential scanning calorimetry, and this calorimetry can be carried out according to "KOBUNSHI BUNSEKI HANDOBUKKU (High Polymer Analysis Handbook)", compiled by Japan Analytical Chemical Society.

If the polymer block B has a number average molecular weight of less than 1,500, the polymer block B may have a low crystallinity and can not bring about the improvement in solvent resistance of the component-i) hydrogenated block copolymer, so that a molded product made of a resin composition comprised of such a hydrogenated block copolymer and a thermoplastic resin may have unsatisfactory solvent resistance. Hence, the polymer block B to be used may preferably have a number average molecular weight of not less than 1,500, and more preferably not less than 3,000.

The polymer block C in the component-i) hydrogenated block copolymer is comprised of a hydrogenated product of an isoprene-butadiene random copolymer having a 1,4-content of not less than 80% before hydrogenation.

In the polymer block C, a random copolymer having a 1,4-content of less than 80% before hydrogenation may make the polymer block C have a high glass transition temperature after hydrogenation, so that a molded product made of a resin composition comprised of such a hydrogenated block copolymer containing such a polymer, and a thermoplastic resin, may have unsatisfactory low-temperature properties.

In the polymer block C, not less than 85%, and preferably not less than 90%, of unsaturated bonds in its molecular chain must have been hydrogenated. This is because a polymer block hydrogenated to a rate less than 85% may make it impossible for the hydrogenated block copolymer to have a weather resistance and a thermal resistance, so that a resin composition comprised of such a hydrogenated block copolymer and a thermoplastic resin may cause a deterioration when melted and kneaded or a molded product made of the resin composition comprised of such a hydrogenated block copolymer and a thermoplastic resin may have unsatisfactory thermal resistance and weather resistance.

Meanwhile, the polymer block C becomes crystalline upon the hydrogenation at the part of unsaturated bonds in its molecular chain. Here, this crystallinity is indicated as crystalline heat of fusion. If the polymer block C has a crystalline heat of fusion higher than 35 mJ/mg, the hydrogenated block copolymer may have unsatisfactory flexibility and low-temperature properties, so that a molded product made of a resin composition comprised of such a hydrogenated block copolymer and a thermoplastic resin may have unsatisfactory flexibility and low-temperature properties. Hence, the polymer block C to be used have a crystalline heat of fusion of not higher than 35 mJ/mg, and preferably not higher than 30 mJ/mg, after hydrogenation.

The crystalline heat of fusion of the polymer block C can be determined by differential scanning calorimetry.

Incidentally, the crystalline heat of fusion of the polymer block C comprised of a copolymer of isoprene and butadiene is affected by the amount of copolymerization of butadiene in that copolymer, the randomness of the chain of isoprene and butadiene and the rate of hydrogenation of the copolymer of isoprene and butadiene. That is, in the case of a polymer block formed into a complete block of isoprene and butadiene or in the case of a polymer block having a tapered form, the butadiene chain in the polymer block formed of isoprene and butadiene becomes longer, and its crystallinity is improved when hydrogenated, so that the flexibility and low-temperature properties of the oil-resistant resin composition may be damaged.

Hence, as the polymer block C in the component-i) hydrogenated block copolymer, it is necessary to use the random copolymer block of isoprene and butadiene. With regard to the compositional ratio in the both of isoprene and butadiene, it may preferably be isoprene/butadiene of from 80/20 to 20/80 in weight ratio, and more preferably from 70/30 to 30/70 in weight ratio.

If the polymer block C has a too small number average molecular weight, the low-temperature properties may be damaged. Hence, the polymer block C may preferably have a number average molecular weight of not less than 5,000, and more preferably from 7,500 to 500,000.

Examples of the configuration of polymer combination in the hydrogenated block copolymer having at least two polymer blocks A, at least one polymer block B and at least one polymer block C are B-A-C-A-B, B-C-A-C-B-A, A-B-C-B-A, A-B-C-A-B, B-A-C-A, A-B-C-A and so forth. In particular, B-A-C-A-B is preferred since a molded product having very good properties in respect of strength and solvent resistance can be obtained.

The component-i) hydrogenated block copolymer, if it has a number average molecular weight of less than 20,000, may have a low mechanical strength, so that a molded product made of a resin composition comprised of such a hydrogenated block copolymer and a thermoplastic resin may have a low mechanical strength. Thus, it it preferable to use a hydrogenated block copolymer having a number average molecular weight of not less than 20,000.

There is no particular upper limit to the number average molecular weight of the component-i) hydrogenated block copolymer. In view of its production and the processability of the resin composition comprised of the component-i) hydrogenated block copolymer and the component-ii) thermoplastic resin, the hydrogenated block copolymer may preferably have a number average molecular weight of up to about 400,000, and more preferably from 30,000 to 300,000.

The component-i) hydrogenated block copolymer may also have in its molecular chain or at its molecular terminal a functional group such as a carboxyl group, a hydroxyl group, an acid anhydride, an amino group or an epoxy group.

Unhydrogenated products of the component-i) hydrogenated block copolymer can be readily obtained by known anionic polymerization.

For example, they can be obtained by a process in which an alkyl lithium compound is used as a polymerization initiator and a vinyl aromatic compound, butadiene, a monovinyl arene and isoprene-butadiene are successively polymerized, or a process in which a dilithium type compound is used as a polymerization initiator and a vinyl aromatic compound, isoprene-butadiene, a monovinyl arene and butadiene are successively polymerized.

As the alkyl lithium compound, alkyl compounds whose alkyl residual group have 1 to 10 carbon atoms, in particular, ethyl lithium, n-propyl lithium, sec-butyl lithium and tert-butyl lithium are preferred.

As the dilithium compound, hexamethylene dilithium, naphthalene dilithium, oligostyldilithium and dilithiostylbenzene are preferred.

The amount of the polymerization initiator used depends on the molecular weight of the desired component-i) hydrogenated block copolymer. Usually, its use in an amount of from 0.01 to 0.3 part by weight based on 100 parts by weight of the whole monomers used in the polymerization is suitable.

Organic solvents that can be used when the unhydrogenated product of the component-i) hydrogenated block copolymer is polymerized may include aliphatic hydrocarbons such as butane, pentane, n-hexane, isopentane, heptane and octane, alicyclic hydrocarbons such as cyclopentane, methyl cyclopentane, cyclohexane and methyl cyclohexane, and aromatic hydrocarbons such as benzene, toluene and xylene.

The polymerization of this unhydrogenated product is, in any polymerization process, carried out at a temperature ranging from -20 to 80°C for about 1 to 50 hours, where a polymerization mixture is added in a poor solvent such as methanol to cause coagulation, followed by heating, or drying under reduced pressure, or the polymerization mixture is dropwise added in boiling water to remove the organic solvent from the mixture by azeotropy, followed by heating, or drying under reduced pressure, to obtain the unhydrogenated product of the component-i) hydrogenated block copolymer.

To obtain the component-i) hydrogenated block copolymer by hydrogenation of the unhydrogenated product of the component-i) hydrogenated block copolymer, any known hydrogenation process may be used.

For example, it is possible to use a process in which a block copolymer is dissolved in a solvent inert to the reaction of hydrogenating the block copolymer and a hydrogenation catalyst, to cause molecular hydrogen to react. The hydrogenation catalyst used here may include noble metal catalysts such as platinum and palladium, Raney nickel compounds, organic nickel compounds and organic cobalt compounds, as well as composite catalysts comprised of any of these compounds and other organic metal compounds, any of which may be used.

The hydrogenation reaction may be carried out at a hydrogen pressure of from normal pressure to about 19.6 MPa (200 kg/cm²) at a reaction temperature of from room temperature to about 250°C for a reaction time of from 0.1 to about 100 hours.

After the hydrogenation reaction has been completed, the block copolymer is coagulated using methanol or the like, followed by heating, or drying under reduced pressure, or the polymerization mixture formed after the hydrogenation reaction has been completed is dropwise added in boiling water to remove the organic solvent from the mixture by azeotropy, followed by heating, or drying under reduced pressure, to obtain the desired component-i) hydrogenated block copolymer.

The component-i) hydrogenated block copolymer may be mixed as it is, with the component-ii) thermoplastic resin, and may be further modified so that it can have a functional group such as a carboxyl group, a hydroxyl group, an acid anhydride, an amino group or an epoxy group in its molecular chain or at its molecular terminal.

The component-ii) thermoplastic resin with which the component-i) hydrogenated block copolymer is mixed may include polyolefin resins such as polyethylene, polypropylene and a copolymer of propylene and ethylene or an α-olefin such as 1-butene; styrene resins such as polystyrene, high-impact polystyrene and ABS; polyester resins such as polyethylene terephthalate and polybutylene terephthalate; polyamide resins such as nylon 6, nylon 6,6 and nylon 12; and polyphenylene ether resins. In particular, polyolefin resins such as polyethylene, polypropylene and a block copolymer of propylene and ethylene are preferred.

With regard to the proportion of the component-i) hydrogenated block copolymer and the component-ii) thermoplastic resin in the oil-resistant resin composition of the present invention, 1 part by weight to 99 parts by weight of the component-i) hydrogenated block copolymer and 99 parts by weight to 1 part by weight of the component-ii) thermoplastic resin, and preferably 5 parts by weight to 95 parts by weight of the component-i) hydrogenated block copolymer and 95 parts by weight to 5 parts by weight of the component-ii) thermoplastic resin, should be used based on 100 parts by weight of the total of the both. This is because the use of more than 99 parts by weight of the component-i) hydrogenated block copolymer may result in an unsatisfactory mechanical strength of the molded product made of such a resin composition, and on the other hand the use of less than 1 part by weight of the same makes it impossible for the resin composition to bring about improvements in impact resistance and low-temperature properties of the molded product made of such a resin composition.

To the oil-resistant resin composition of the present invention, a mineral oil type softening agent such as paraffin oil or naphthene oil may be further optionally added. This can improve a pour processability required when the resin composition is molded and processed and can impart a flexibility to the molded product made of such a resin composition.

It is also possible to add an inorganic filler such as calcium carbonate, talc, carbon black, titanium oxide, silica, clay, barium sulfate or magnesium carbonate, an inorganic or organic fiber such as glass fiber or carbon fiber, and also a heat stabilizer, an antioxidant, a light stabilizer, a flame retardant, a tackifier, an antistatic agent and a foaming agent.

The oil-resistant resin composition of the present invention can be produced by conventionally known methods. In order to obtain the resin composition as the best homogeneous mixture, the composition may preferably be melt-kneaded with heating, using a kneading machine such as a single-screw extruder, a twin-screw extruder, a Banbury mixer, a Brabender mixer, an open roll and a kneader.

Before the melt-kneading, the compounded materials may be previously dry-blended using a mixing machine such as a Henschel mixer or a tumbling mixer and the resulting mixture may be melt-kneaded, whereby the resin composition can be obtained as a more homogeneous mixture.

The oil-resistant resin composition of the present invention can be molded by, e.g., extrusion, injection molding, blow molding, compression molding or calendering into films, sheets, laminates of other films or sheets, tubes, hoses, belts, sports shoes, fashionable sandals, cabinets for televisions or stereos, parts for household utensils such as housings for vacuum cleaners, automobile interior and exterior goods such as bumpers or body panels of automobiles, daily necessities, leisure goods, stationery, toys, industrial goods and so forth.

The molded product obtained from the oil-resistant resin composition of the present invention can have good properties in respect of mechanical strength, flexibility, low-temperature properties and so forth like molded products obtained from compositions comprised of i) the conventional hydrogenated block copolymer obtained by hydrogenating a copolymer of a monovinyl arene and a conjugated diene compound and ii) a thermoplastic resin. Moreover, it can be a molded product having very good properties also in respect of resistance to organic solvents, compared with molded products obtained from conventional resin compositions of this type.

### EXAMPLES

The specific constitution of the oil-resistant resin composition of the present invention will be described below by giving Examples, and physical properties of molded products made of the oil-resistant resin composition will be demonstrated in comparison with physical properties of molded products made of comparative resin compositions.

Evaluation of performance of unhydrogenated block copolymers and hydrogenated block copolymers and measurement of physical properties, i.e., the following items (a) to (h), of molded products made of resin compositions were made in the following way.
(a) Molecular weight:
   Number average molecular weight was measured by gel permeation chromatography provided with a low-angle laser light scattering detector (LALLS-GPC).
(b) Microstructure:
   A block copolymer having not been hydrogenated was dissolved in deuterated toluene, and ¹H chemical shifts were measured using a 500 MHz nuclear magnetic resonance (NMR) apparatus, to calculate 1,4-content of the polymer block B and polymer block C each comprised of a conjugated diene.
(c) Rate of hydrogenation:
   A block copolymer having been hydrogenated was dissolved in deuterated toluene, and ¹H chemical shifts were measured using a 500 MHz nuclear magnetic resonance (NMR) apparatus, to calculate the rate of hydrogenation of the polymer block B and polymer block C each comprised of a conjugated diene.
(d) Crystalline melting point, crystalline heat of fusion, and glass transition temperature:
   The crystalline melting point of the polymer block B, the crystalline heat of fusion and glass transition temperature (Tg) of the polymer block C were measured by differential scanning calorimetry.
(e) Melt flow rate (MFR):
   Measured according to JIS K7210.
(f) Tensile strength at break (TB) (MPa) (kg/cm²):
   Measured according to JIS K7110.
(g) Hardness:
   Hardness at 25°C and 0°C each was measured. When the hardness at 0°C is larger than that at 25°C, the low-temperature properties become unsatisfactory.
(h) Oil resistance:
   A 2 mm thick extruded sheet made of the resin composition was cut in 2 cm × 4 cm to prepare test pieces, and the weight of each test piece was measured. Next, the test pieces were immersed in 100 ml of JIS-1 swelling oil at room temperature for 24 hours. Thereafter, these were taken out and washed with acetone several times to remove the swelling oil from the surfaces of the test pieces. Then the resulting test pieces were subjected to vacuum drying at 100°C for 24 hours, and thereafter the weight of each test piece was measured. Having thus operated, a loss of weight of the test piece, concerning the immersion in swelling oil, was used as an indication of oil resistance.
   Production examples of the component-i) hydrogenated block copolymer used in Examples or Comparative Examples are shown below as Reference Examples 1 to 3.

### Reference Example 1

Production of hydrogenated block copolymer No.1:

Into a pressure container with a stirrer, 2,000 g of cyclohexane, 30 g of butadiene and 0.9 g of n-butyl lithium were charged to carry out polymerization at 50°C for 60 minutes. Thereafter, 65 g of styrene was charged to carry out polymerization for 60 minutes, and a mixed monomer of 175 g of isoprene and 115 g of butadiene was further charged to carry out polymerization for 60 minutes. Subsequently, 65 g of styrene was charged to carry out polymerization for 60 minutes, and then 30 g of butadiene was charged to carry out polymerization for 60 minutes.

Through polymerization thus carried out, a block copolymer, No.(1), with the configuration of polybutadiene (block B)-polystyrene (block A)-poly(conjugated diene) (block C)-polystyrene (block A)-polybutadiene (block B) was obtained.

Results of analyses of this block copolymer No.(1) are shown in Tables 1, 2 and 3.

After a 15% by weight of cyclohexane solution of the block copolymer No.(1) was prepared in the pressure container, the inside thereof was evacuated and then replaced with hydrogen, where 0.5% by weight of a palladium catalyst for the block copolymer No.(1) was further added, to carry out hydrogenation in an atmosphere of hydrogen of 1 MPa (10 kg/cm²). Thus, a hydrogenated block copolymer, No.1, having a rate of hydrogenation of 96% was obtained.

Results of analyses of this hydrogenated block copolymer No.1 are shown in Table 4.

### Reference Example 2

Production of hydrogenated block copolymers No.2, No.3, No.4 and No.6:

The production of the hydrogenated block copolymer No.1 was repeated except that the types and amounts of the monomers, the amount of the polymerization initiator, the polymerization temperature, the polymerization time, the hydrogenation temperature and the hydrogenation time were changed, to obtain block copolymers No.(2), No.(3), No.(4) and No.(6) as shown in Tables 1, 2 and 3, followed by hydrogenation to obtain hydrogenated block copolymers No.2, No.3, No.4 and No.6 as shown in Table 4.

### Reference Example 3

Production of hydrogenated block copolymer No.5:

The production of the hydrogenated block copolymer No.1 was repeated except that diethyl ether was added before the polymerization was initiated and the types and amounts of the monomers, the amount of the polymerization initiator, the polymerization temperature, the polymerization time, the hydrogenation temperature and the hydrogenation time were changed, to obtain a block copolymer, No.(5), as shown in Tables 1, 2 and 3, followed by hydrogenation to obtain a hydrogenated block copolymer, No.5, as shown in Table 4.

Of the component-i) hydrogenated block copolymers thus obtained, the hydrogenated block copolymers No.1 and No.3 are within the scope of the present invention, but others are outside the scope of the present invention. More specifically, in the hydrogenated block copolymer No.2, the polymer block B has a rate of hydrogenation of less than 85% and also has a crystalline melting point lower than 85°C. In the hydrogenated block copolymer No. 4, the polymer block C has a crystalline heat of fusion higher than 35 mJ/mg. In the hydrogenated block copolymer No 5, the polymer blocks B and C each have 1,4-content of less than 80% before hydrogenation and also the polymer block B has a crystalline melting point lower than 85°C. The hydrogenated block copolymer No. 6 has no polymer block B.

**Table 1**

| Block copolymer (before hydrogenation) | Block configuration | Number average molecular weight (the whole) |
|---|---|---|
| | | (×10⁴) |
| No.(1) | B-A-C-A-B | 5.0 |
| No.(2) | B-A-C-A-B | 5.0 |
| No.(3) | B-A-C-A | 16.0 |
| No.(4) | B-A-C-A | 16.0 |
| No.(5) | B-A-C-A-B | 5.0 |
| No.(6) | A-C-A | 6.5 |

**Table 2**

| Block copolymer (before hydrogenation) | Number average molecular weight (×10⁴) | | |
|---|---|---|---|
| | Block A | Block B | Block C |
| No.(1) | 0.5 | 0.25 | 3.5 |
| No.(2) | 0.5 | 0.25 | 3.5 |
| No.(3) | 2.5 | 1.0 | 10.0 |
| No.(4) | 2.5 | 1.0 | 10.0 |
| No.(5) | 0.5 | 0.25 | 3.5 |
| No.(6) | 0.9 | 0 | 4.7 |

**Table 3**

| Block copolymer (before hydrogenation) | Isoprene/butadiene in block C (weight ratio) | | 1,4-content (%) | |
|---|---|---|---|---|
| | Isoprene | Butadiene | Block B | Block C |
| No.(1) | 70 | 30 | 90 | 92 |
| No.(2) | 70 | 30 | 90 | 92 |
| No.(3) | 40 | 60 | 89 | 91 |
| No.(4) | 15 | 85 | 92 | 90 |
| No.(5) | 70 | 30 | 72 | 76 |
| No.(6) | 100 | 0 | - | 92 |

**Table 4**

| Hydrogenated block copolymer | Rate of hydrogenation | Crystalline melting point of block B | Crystalline heat of fusion of block C | Glass transition point of Block C |
|---|---|---|---|---|
| | (%) | (°C) | (mJ/mg) | (°C) |
| No.1 | 96 | 86 | 10.5 | -62 |
| No.2 | 74 | 57 | 8.1 | -59 |
| No.3 | 98 | 102 | 28.0 | -58 |
| No.4 | 98 | 102 | 38.9 | 28 |
| No.5 | 93 | 31 | 17.8 | -52 |
| No.6 | 98 | - | 0.0 | -58 |

### Examples 1 to 4 & Comparative Examples 1 to 4

Using the hydrogenated block copolymers No.1 to No.6 and a polypropylene resin (available from Mitsubishi Chemical Company Limited; MA-3, homopropylene, M.I.: 11 g/10 minutes), resin compositions having weight composition as shown in Tables 5 and 6 were formed into pellets by means of a twin-screw extruder, TEM-35, manufactured by Toshiba Machine Co., Ltd.

Using the pellets, sheets of 2 mm thick were formed by injection molding, which were then cut in a given size to obtain test pieces. On these test pieces, their tensile strength at break, hardness and oil resistance were tested to obtain the results as shown in Table 7.

**Table 5**

| | Example | | | |
|---|---|---|---|---|
| | 1 | 2 | 3 | 4 |
| Hydrogenated block copolymer: | | | | |
| No.1 | 70 | | 95 | 10 |
| No.3 | | 70 | | |
| Polypropylene: | 30 | 30 | 5 | 90 |
| MFR (g/10 minutes) | 9.8 | 0.4 | 9.5 | 10.8 |

**Table 6**

| | Comparative Example | | | |
|---|---|---|---|---|
| | 1 | 2 | 3 | 4 |
| Hydrogenated block copolymer: | | | | |
| No.2 | 70 | | | |
| No.4 | | 70 | | |
| No.5 | | | 70 | |
| No.6 | | | | 70 |
| Polypropylene: | 30 | 30 | 30 | 30 |
| MFR (g/10 minutes) | 10.2 | 0.5 | 14.1 | 4.3 |

**Table 7**

| No. | Tensile strength at break | Hardness (JIS-A) | | Oil resistance (weight loss) |
|---|---|---|---|---|
| | MPa (kg/cm²) | (25°C) | (0°C) | (%) |
| Example: | | | | |
| 1 | 21.7 (221) | 90 | 91 | 1.6 |
| 2 | 26.6 (271) | 91 | 92 | 2.2 |
| 3 | 22.1 (225) | 89 | 89 | 2.2 |
| 4 | 30.4 (310) | 96 | - | 2.0 |

| Comparative Example: | | | | |
|---|---|---|---|---|
| 1 | 21.1 (215) | 88 | 88 | 42.0 |
| 2 | 29.8 (304) | 94 | >99 | 0.9 |
| 3 | 23.7 (242) | 89 | 90 | 58.0 |
| 4 | 23.0 (234) | 82 | 83 | 60.0 |

As is seen from the results shown in Table 7, the molded products made of the resin composition of the present invention have superior properties in respect of mechanical strength, oil resistance and low-temperature properties.

On the other hand, although the resin compositions of Comparative Examples 1, 3 and 4 have a good flowability and the molded products made of such resin compositions have good properties in respect of mechanical strength, they have an unsatisfactory oil resistance.

The molded product made of the resin composition of Comparative Example 2 also has good properties in respect of oil resistance and mechanical strength, but has a very higher hardness at low temperature (0°C) than that at room temperature (25°C), showing that it has unsatisfactory low-temperature properties.

## Claims

1. An oil-resistant resin composition comprising from 1% by weight to 99% by weight of i) a hydrogenated block copolymer having at least two polymer blocks A, at least one polymer block B and at least one polymer block C in the molecule and from 99% by weight to 1% by weight of ii) a thermoplastic resin;
said polymer block A being a polymer block comprising a monovinyl arene;
said polymer block B being a hydrogenated polymer block obtained by hydrogenating to a rate of hydrogenation of not less than 85% a butadiene polymer block having a 1,4-content of not less than 80% before hydrogenation; and said hydrogenated polymer block having a crystalline melting point of not lower than 85°C after hydrogenation; and
said polymer block C being a hydrogenated polymer block obtained by hydrogenating to a rate of hydrogenation of not less than 85% an isoprene-butadiene random copolymer block having a 1,4-content of not less than 80% before hydrogenation; and said hydrogenated polymer block having a crystalline heat of fusion of not higher than 35 mJ/mg after hydrogenation.

2. The oil-resistant resin composition according to claim 1, wherein said polymer block B is a hydrogenated polymer block obtained by hydrogenating a butadiene polymer block having a 1,4-content of not less than 85% before hydrogenation.

3. The oil-resistant resin composition according to claim 1, wherein said polymer block B is a hydrogenated polymer block obtained by hydrogenating a butadiene polymer block to a rate of hydrogenation of not less than 90%.

4. The oil-resistant resin composition according to any one of claims 1 to 3, wherein said polymer block B has a crystalline melting point of not lower than 90°C.

5. The oil-resistant resin composition according to any one of claims 1 to 4, wherein said polymer block B has a number average molecular weight of not less than 1,500.

6. The oil-resistant resin composition according to claim 5, wherein said polymer block C is a hydrogenated polymer block obtained by hydrogenating an isoprene-butadiene random copolymer block to a rate of hydrogenation of not less than 90%.

7. The oil-resistant resin composition according to claim 1 or 6, wherein said polymer block C has a crystalline heat of fusion of not higher than 30 mJ/mg after hydrogenation.

8. The oil-resistant resin composition according to claim 1, 6 or 7, wherein said isoprene-butadiene random copolymer block in the polymer block C has an isoprene/butadiene compositional ratio of from 80/20 to 20/80 in weight ratio.

9. The oil-resistant resin composition according to claim 1, 6, 7 or 8, wherein said polymer block C has a number average molecular weight of not less than 5,000.

10. The oil-resistant resin composition according to claim 1, wherein said polymer block A is a polymer block of styrene or α-methyl styrene.

11. The oil-resistant resin composition according to claim 1 or 10, wherein said polymer block A has a number average molecular weight of not less than 2,000.

12. The oil-resistant resin composition according to claim 1, wherein said component-i) hydrogenated block copolymer has a number average molecular weight of from 20,000 to 400,000.

13. The oil-resistant resin composition according to claim 1, wherein said component-i) hydrogenated block copolymer have the configuration of polymer block A, polymer block B and polymer block C combination of B-A-C-A-B, B-C-A-C-B-A, A-B-C-B-A, A-B-C-A-B, B-A-C-A or A-B-C-A.

14. The oil-resistant resin composition according to claim 13, wherein said configuration of polymer combination is B-A-C-A-B.

15. The oil-resistant resin composition according to claim 1, wherein said component-ii) thermoplastic resin comprises a polyolefin resin, a styrene resin, a polyester resin, a polyamide resin or a polyphenylene ether resin.

16. The oil-resistant resin composition according to claim 1, wherein said component-ii) thermoplastic resin comprises a polyolefin resin.

## Patentansprüche

1. Ölbeständige Harzzusammensetzung, umfassend von 1 bis 99 Gew.-% eines i) hydrierten Blockcopolymers mit mindestens zwei Polymerblöcken A, mindestens einem Polymerblock B und mindestens einem Polymerblock C im Molekül und von 99 bis 1 Gew.-% eines ii) thermoplastischen Harzes;
wobei der Polymerblock A ein Polymerblock ist, umfassend ein Polyvinylaren;
der Polymerblock B ein hydrierter Polymerblock ist, erhalten durch Hydrierung eines Butadien-Polymerblocks, der einen 1,4-Gehalt von nicht weniger als 80% vor dem Hydrieren aufweist, bis zu einem Hydrierungsgrad von nicht weniger als 85%; und dieser hydrierte Polymerblock einen kristallinen Schmelzpunkt von nicht tiefer als 85°C nach dem Hydrieren hat; und
der Polymerblock C ein hydrierter Polymerblock ist, erhalten durch Hydrierung eines Isopren-Butadien statistischen Copolymerblocks, der einen 1,4-Gehalt von nicht weniger als 80% vor dem Hydrieren aufweist, bis zu einem Hydrierungsgrad von nicht weniger als 85%; und wobei dieser hydrierte Polymerblock eine kristalline Schmelzwärme von nicht höher als 35 mJ/mg nach dem Hydrieren hat.

2. Ölbeständige Harzzusammensetzung gemäß Anspruch 1, wobei der Polymerblock B ein hydrierter Polymerblock ist, erhalten durch Hydrierung eines Butadien-Polymerblocks mit einem 1,4-Gehalt vor dem Hydrieren von nicht weniger als 85%.

3. Ölbeständige Harzzusammensetzung gemäß Anspruch 1, wobei der Polymerblock B ein hydrierter Polymerblock ist, erhalten durch Hydrierung eines Butadien-Polymerblocks bis zu einem 1,4-Gehalt vor dem Hydrieren von nicht weniger als 90%.

4. Ölbeständige Harzzusammensetzung gemäß irgendeinem der Ansprüche 1 bis 3, wobei der Polymerblock B einen kristallinen Schmelzpunkt von nicht tiefer als 90°C hat.

5. Ölbeständige Harzzusammensetzung gemäß irgendeinem der Ansprüche 1 bis 4, wobei der Polymerblock B ein Zahlenmittel des Molekulargewichtes von nicht weniger als 1.500 hat.

6. Ölbeständige Harzzusammensetzung gemäß Anspruch 5, wobei der Polymerblock C ein hydrierter Polymerblock ist, erhalten durch Hydrierung eines Isopren-Butadien statistischen Copolymerblocks bis zu einem 1,4-Gehalt vor dem Hydrieren von nicht weniger als 90%.

7. Ölbeständige Harzzusammensetzung gemäß Anspruch 1 oder 6, wobei der Polymerblock C eine kristalline Schmelzwärme von nicht höher als 30 mJ/mg nach dem Hydrieren hat.

8. Ölbeständige Harzzusammensetzung gemäß Anspruch 1, 6 oder 7, wobei der Isopren-Butadien statistische Copolymerblock in dem Polymerblock C ein Isopren/Butadien-Zusammensetzungsverhältnis von 80/20 bis 20/80, bezogen auf das Gewicht, aufweist.

9. Ölbeständige Harzzusammensetzung gemäß Anspruch 1, 6, 7 oder 8, wobei der Polymerblock C ein Zahlenmittel des Molekulargewichts von nicht weniger als 5.000 hat.

10. Ölbeständige Harzzusammensetzung gemäß Anspruch 1, wobei der Polymerblock A ein Polymerblock aus Styrol oder α-Methylstyrol ist.

11. Ölbeständige Harzzusammensetzung gemäß Anspruch 1 oder 10, wobei der Polymerblock A ein Zahlenmittel des Molekulargewichts von nicht weniger als 2.000 hat.

12. Ölbeständige Harzzusamensetzung gemäß Anspruch 1, wobei die Komponente -i) hydriertes Blockcopolymer ein Zahlenmittel des Molekulargewichtes von 20.000 bis 400.000 hat.

13. Ölbeständige Harzzusammensetzung gemäß Anspruch 1, wobei die Komponente-i) hydriertes Blockcopolymer die Konfiguration einer Polymerblock A -, Polymerblock B - und Polymerblock C -Kombination von B-A-C-A-B, B-C-A-C-B-A, A-B-C-B-A, A-B-C-A-B, B-A-C-A oder A-B-C-A hat.

14. Ölbeständige Harzzusammensetzung gemäß Anspruch 13, wobei die Konfiguration der Polymerkombination B-A-C-A-B ist.

15. Ölbeständige Harzzusammensetzung gemäß Anspruch 1, wobei die Komponente-ii) thermoplastisches Harz ein Polyolefinharz, ein Styrolharz, ein Polyesterharz, ein Polyamidharz oder ein Polyphenylenetherharz umfaßt.

16. Ölbeständige Harzzusammensetzung gemäß Anspruch 1, wobei die Komponente-ii) thermoplastisches Harz ein Polyolefinharz umfaßt.

## Revendications

1. Composition de résine résistante à l'huile, comprenant de 1 % en poids à 99 % en poids de (i) un copolymère séquencé hydrogéné ayant au moins deux séquences polymères A, au moins une séquence polymère B et au moins une séquence polymère C dans la molécule, et de 99 % en poids à 1 % en poids de ii) une résine thermoplastique ;
ladite séquence polymère A étant une séquence de polymère comprenant un monovinylarène ;
ladite séquence polymère B étant une séquence de polymère hydrogéné qu'on obtient par hydrogénation, à un taux d'hydrogénation d'au moins 85 %, d'une séquence polymère de butadiène ayant une teneur en 1,4 d'au moins 80 % avant l'hydrogénation ; et ladite séquence de polymère hydrogéné ayant un point de fusion cristalline d'au moins 85°C après l'hydrogénation ; et
ladite séquence polymère C étant une séquence de polymère hydrogéné qu'on obtient par hydrogénation, à un taux d'hydrogénation d'au moins 85 %, d'une séquence de copolymère aléatoire d'isoprène-butadiène ayant une teneur en 1,4 d'au moins 80 % avant l'hydrogénation ; et ladite séquence de polymère hydrogéné ayant une chaleur de fusion cristalline ne dépassant pas 35 mJ/mg après l'hydrogénation.

2. Composition de résine résistante à l'huile selon la revendication 1, dans laquelle ladite séquence polymère B est une séquence de polymère hydrogéné qu'on obtient par hydrogénation d'une séquence polymère de butadiène ayant une teneur en 1,4 d'au moins 85 % avant l'hydrogénation.

3. Composition de résine résistante à l'huile selon la revendication 1, dans laquelle ladite séquence polymère B est une séquence de polymère hydrogéné qu'on obtient en hydrogénant une séquence polymère de butadiène à un taux d'hydrogénation d'au moins 90 %.

4. Composition de résine résistante à l'huile selon l'une quelconque des revendications 1 à 3, dans laquelle ladite séquence polymère B a un point de fusion cristalline d'au moins 90°C.

5. Composition de résine résistante à l'huile selon l'une quelconque des revendications 1 à 4, dans laquelle ladite séquence polymère B a un poids moléculaire moyen en nombre d'au moins 1 500.

6. Composition de résine résistante à l'huile selon la revendication 5, dans laquelle ladite séquence polymère C est une séquence de polymère hydrogéné qu'on obtient en hydrogénant une séquence de copolymère aléatoire d'isoprène-butadiène à un taux d'hydrogénation d'au moins 90 %.

7. Composition de résine résistante à l'huile selon la revendication 1 ou 6, dans laquelle ladite séquence polymère C a une chaleur de fusion cristalline d'au plus 30 mJ/mg après l'hydrogénation.

8. Composition de résine résistante à l'huile selon la revendication 1, 6 ou 7, dans laquelle ladite séquence de copolymère aléatoire d'isoprène-butadiène dans la séquence polymère C a un rapport pondéral de composition d'isoprène/butadiène de 80/20 à 20/80.

9. Composition de résine résistante à l'huile selon la revendication 1, 6, 7 ou 8, dans laquelle ladite séquence polymère C a un poids moléculaire moyen en nombre d'au moins 5 000.

10. Composition de résine résistante à l'huile selon la revendication 1, dans laquelle ladite séquence polymère A est une séquence polymère de styrène ou d'α-méthyl-styrène.

11. Composition de résine résistante à l'huile selon la revendication 1 ou 10, dans laquelle ladite séquence polymère A a un poids moléculaire moyen en nombre d'au moins 2 000.

12. Composition de résine résistante à l'huile selon la revendication 1, dans laquelle ledit composant i), c'est-à-dire le copolymère séquencé hydrogéné, a un poids moléculaire moyen en nombre de 20 000 à 400 000.

13. Composition de résine résistante à l'huile selon la revendication 1, dans laquelle ledit composant i), c'est-à-dire le copolymère séquencé hydrogéné, a la configuration d'une combinaison de la séquence polymère A, de la séquence polymère B et de la séquence polymère C, à savoir B-A-C-A-B, B-C-A-C-B-A, A-B-C-B-A, A-B-C-A-B, B-A-C-A ou A-B-C-A.

14. Composition de résine résistante à l'huile selon la revendication 13, dans laquelle ladite configuration polymère est B-A-C-A-B.

15. Composition de résine résistante à l'huile selon la revendication 1, dans laquelle ledit composant ii), c'est-à-dire la résine thermoplastique, comprend une résine polyoléfinique, une résine styrénique, une résine de polyester, une résine de polyamide ou une résine d'éther de polyphénylène.

16. Composition de résine résistante à l'huile selon la revendication 1, dans laquelle ledit composant ii), c'est-à-dire la résine thermoplastique, comprend une résine polyoléfinique.
